# EUROPEAN PATENT SPECIFICATION

(11) **EP 3 420 860 B1**
(45) Date of publication and mention of the grant of the patent: **28.02.2024**
(21) Application number: 17895508.4
(22) Date of filing: 19.12.2017
(51) Int. Cl.: G01G 21/23, G01G 19/52, A47J 36/00, A47J 27/00, G01G 23/00

(54) **SPLIT TYPE RICE COOKER**
GETEILTER REISKOCHER
CUISEUR À RIZ DE TYPE DIVISÉ

(30) Priority: 31.03.2017 CN 201720340935 U; 31.03.2017 CN 201720340885 U
(43) Date of publication of application: 02.01.2019
(73) Proprietor: Foshan Shunde Midea Electrical Heating Appliances Manufacturing Co., Limited, Foshan, Guangdong 528311 (CN)
(72) Inventor: LUO, Zhixiao, Foshan Guangdong 528311 (CN); ZHU, Chuanbin, Foshan Guangdong 528311 (CN); CHEN, Xianhuai, Foshan Guangdong 528311 (CN); FU, Zhengting, Foshan Guangdong 528311 (CN); ZHU, Linbo, Foshan Guangdong 528311 (CN); YUAN, Wei, Foshan Guangdong 528311 (CN); CHEN, Wei, Foshan Guangdong 528311 (CN); WU, Yuquan, Foshan Guangdong 528311 (CN)
(74) Representative: Lam, Alvin
(86) International application number: PCT/CN2017/117263
(87) International publication number: WO 2018/176931

(56) References cited:
- EP-A2- 2 863 188
- WO-A1-2016/056245
- CN-A- 105 953 891
- CN-A- 106 308 447
- CN-U- 205 923 702
- CN-U- 206 618 485
- JP-A- 2005 000 489
- JP-A- 2013 158 472
- US-A1- 2014 008 133

## Description

### FIELD

The present disclosure relates to a technical field of household appliances, and specifically to a split electric rice cooker.

### BACKGROUND

In the related art, small home appliances have been popularized in people's lives, and each family basically possesses an electric rice cooker, an induction cooker and other household appliances. More and more products may be placed in a kitchen with product diversification. In order to reduce household appliances and thus reduce their occupation of the kitchen space, the electric rice cooker and the induction cooker can be integrated into a split electric rice cooker. An existing split electric rice cooker is only provided with a simple weighing device, and when a lot of food is placed in a cooker body, a maximum range of the weighing device will be exceeded, causing a weighing module to be damaged and causing a weighing function to fail.

JP2013158472 discusses a rice cooker which includes a main body, a container housed inside the body so as to be freely taken in and out and housing an object to be cooked, and a weight detector for detecting the weight of the body and the container housing the object to be cooked.

US 2014/008133 A1 discusses a load cell assembly for an electronic scale including a substantially flat plate having an outer portion and a load cell aperture defining an inner portion having a deflectable member.

### SUMMARY

The present disclosure seeks to solve one of the above technical problems existing in the related art to at least some extent. Thus, an objective of the present disclosure is to propose a split electric rice cooker that is able to provide overload protection for a weighing sensor.

According to one aspect, the present invention provides a split electric rice cooker as set out in claim 1.The split electric rice cooker according to embodiments of the present disclosure can provide overload protection for the weighing sensor, thereby prolonging service life of the weighing sensor.

In addition, the split electric rice cooker may further have the additional technical features as follows.

A support plate and a vertical snapping plate may be provided in the weighing-device mounting groove, and the weighing sensor may be sandwiched between the vertical snapping plate and the support plate.

The support plate may include: a first support plate, a second support plate, a third support plate, and a fourth support plate; the first support plate, the second support plate, the third support plate, and the fourth support plate are provided to a first side wall, a second side wall, a third side wall and a fourth side wall of the weighing-device mounting groove respectively; the first side wall, the second side wall, the third side wall and the fourth side wall are connected successively.

The body portion may be an annular frame body, and the cantilever weighing portion may be provided within the body portion.

The cantilever weighing portion may include a first cantilever and a second cantilever; the first cantilever may be T-shaped and may include a transverse section and a longitudinal section; the longitudinal section may be connected with the body portion, and two ends of the transverse section are separately provided with the second cantilever.

The body portion may include: a first frame bar, a second frame bar, a third frame bar, and a fourth frame bar connected successively; the first frame bar may be adjacent to the transverse section; the first frame bar, the second frame bar, the third frame bar, and the fourth frame bar may be apt to abut against the first support plate, the second support plate, the third support plate, and the fourth support plate respectively.

The first support plate may be an inverted three-step structure; the third support plate may have an inverted two-step structure; the first frame bar may be apt to abut against a bottom surface of a second step of the first support plate; the transverse section may be suspended below a bottom surface of a first step of the first support plate; the first step of the first support plate may constitute the limiting plate; and the third frame bar may be apt to abut against a bottom surface of a first step of the third support plate.

The present disclosure, the bottom surface of the second step of the first support plate may be flush with the bottom surface of the first step of the third support plate.

The present disclosure, a third step of the first support plate and a second step of the third support plate clamp may respectively abut against the first frame bar and the third frame bar, so as to limit the position of the body portion in a direction parallel to the longitudinal section.

The present disclosure, a bottom surface of the third step of the first support plate and a bottom surface of the second step of the third support plate may each be configured as a guide bevel.

The present disclosure, the second support plate and the fourth support plate may be respectively located outside the second cantilevers of the corresponding sides to evade the second cantilevers.

The present disclosure, a limiting protrusion may be provided on each of the second support plate and the fourth support plate, and the limiting protrusion on the second support plate and the limiting protrusion on the fourth support plate clamp and may respectively abut against the second frame bar and the fourth frame bar, so as to limit the position of the body portion in a direction parallel to the transverse section.

The present disclosure, each of the second support plate and the fourth support plate may be divided into two sections spaced apart from each other, and one vertical snapping plate may be disposed between the two sections.

The present disclosure, the bottom of the base may be further provided with a catching groove, the press cover may be further provided with a pre-assembled catching portion, and the pre-assembled catching portion may be engaged within the catching groove.

The press cover may be further fastened to the bottom of the base through a press-cover threaded assembly.

The present disclosure, a distance between the cantilever weighing portion and the limiting plate may be L, deformation displacement of the cantilever weighing portion with respect to the body portion may be associated with the weight to be weighed, and the deformation displacement of the cantilever weighing portion may be S when the weighing sensor 510 is in a maximum range, in which L ≤ S.

According to embodiments of the invention, the press cover and the support leg is integrally formed, and the support leg is supported on a bottom surface of the cantilever weighing portion and is able to be deformed along with the press cover and push the cantilever weighing portion upwards

The weighing sensor may be provided with a mounting hole, an upper surface of the support leg may be fixed with a fixing column, the fixing column may be provided through the mounting hole and may have an upper end formed with a diameter-enlarged portion, and a radial dimension of the diameter-enlarged portion may be larger than a radial dimension of the mounting hole, such that the weighing sensor may be clamped and fixed between the diameter-enlarged portion and the support leg.

The weighing device may include: a weighing sensor including a body portion and a cantilever weighing portion, the cantilever weighing portion being provided to the body portion; a support leg supported on a bottom surface of the cantilever weighing portion and fixed with the cantilever weighing portion; a limiting portion provided on the support leg and located below the body portion, the limiting portion being apt to move upwards with respect to the body portion along with the support leg to abut against a bottom surface of the body portion.

The weighing device may prevent the weighing sensor from being overloaded and failing, and prolong service life of the weighing sensor.

A distance between the limiting portion and the body portion may be L, deformation displacement of the cantilever weighing portion with respect to the body portion may be associated with the weight to be weighed, and the deformation displacement of the cantilever weighing portion may be S when the weighing sensor is in a maximum range, in which L≤S.

The body portion may be an annular frame body, and the cantilever weighing portion may be provided within the body portion.

The cantilever weighing portion may include a first cantilever and a second cantilever; the first cantilever may be fixed with the body portion; the second cantilever may be fixed with the first cantilever and may also be fixed with the support leg.

The second cantilever may be located at each of two sides of the first cantilever.

The first cantilever may be T-shaped and include a transverse section and a longitudinal section, and two ends of the transverse section may be separately provided with the second cantilever.

The support leg may include a support-leg body and a support block provided to the support-leg body, the support block may be fixed with the second cantilever.

Respective lower surfaces of the first cantilever and the second cantilever may be flush with each other, and both may abut against an upper surface of the support block.

The second cantilever may be provided with a mounting hole; the weighing device further may include a weighing-device threaded fastener, and the weighing-device threaded fastener may be threadedly fixed with the support block after passing through the mounting hole from the top downwards.

A distance between facing-away outer sides of the two second cantilevers may be greater than or equal to a transverse length of the support block.

The limiting portion may be provided to an end face of each of two transverse ends of the support block.

A hollowed groove may be defined between the body portion and the second cantilever, and an outer side surface of the limiting portion may be outside an outer edge of the hollowed groove.

The second cantilevers at two sides of the first cantilever may be arranged symmetrically, and the first cantilever may be spaced apart from and arranged parallel to the second cantilever.

The split electric rice cooker may include the weighing device.

The split electric rice cooker may further include: a base provided with a weighing-device mounting groove at a bottom thereof, the weighing sensor may be fixed in the weighing-device mounting groove; a cooker body apt to rest on the base and separable with respect to the base; a press cover provided to the bottom of the base and shielding the weighing-device mounting groove. The press cover may be integrally formed with the support leg, the support leg may be supported on a bottom surface of the cantilever weighing portion, and the support leg may be deformed along with the press cover and push the cantilever weighing portion upwards; or the press cover may be provided with a press-cover clearance hole for the support leg to pass downwards.

The weighing sensor may be provided with a mounting hole, an upper surface of the support leg may be fixed with a fixing column, the fixing column may be provided through the mounting hole and may have an upper end formed with a diameter-enlarged portion, and a radial dimension of the diameter-enlarged portion may be larger than a radial dimension of the mounting hole, such that the weighing sensor may be clamped and fixed between the diameter-enlarged portion and the support leg.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

Fig. 1 is a schematic view of a split electric rice cooker according to examples of one aspect of the present disclosure.
Fig. 2 is a partially enlarged view of Fig. 1.
Fig. 3 is a bottom schematic view of a split electric rice cooker according to an example of the present disclosure, with a part of press covers being removed.
Fig. 4 is a partially enlarged view of Fig. 3.
Fig. 5 is a sectional schematic view of a split electric rice cooker according to an example of the present disclosure.
Fig. 6 is a schematic view of a press cover and a support leg of a split electric rice cooker according to another embodiment of the present disclosure.
Fig. 7 is an assembly schematic view of a weighing sensor and a support leg according to an example of the present disclosure.
Fig. 8 is an exploded schematic view of a weighing device according to an example of the present disclosure.
Fig. 9 is a sectional schematic view of a weighing device according to an example of the present disclosure.
Fig. 10 is another schematic view of a weighing device according to an example of the present disclosure.
Fig. 11 is a partial schematic view of a split electric rice cooker according to examples of a second aspect of the present disclosure.
Fig. 12 is a partially enlarged view of area A circled in Fig. 11.
Fig. 13 is a partially exploded schematic view of a split electric rice cooker according to an embodiment of the present disclosure.
Fig. 14 is a schematic view of a press cover and a support leg of a split electric rice cooker according to an embodiment of the present disclosure.

Reference numerals:
split electric rice cooker 1000, base 100, weighing-device mounting groove 120, first side wall 121, second side wall 122, third side wall 123, fourth side wall 124, first support plate 131, second support plate 132, third support plate 133, fourth support plate 134, vertical snapping plate 140, limiting plate 160,
cooker body 200, base plate 210, base-plate through hole 214, pot body 220, inner-pot heat insulation piece 230, bottom-wall protrusion 234,
weighing device 500,
weighing sensor 510, body portion 511, cantilever weighing portion 512, first cantilever 5121, transverse section 5121a, longitudinal section 5121b, second cantilever 5122, mounting hole 5122a, hollowed groove 513,
support leg 520, support-leg body 521, support block 522, limiting portion 524, fixing column 523, diameter-enlarged portion 5231,
weighing-device threaded fastener 530,
press cover 600, press-cover clearance hole 601, weakening groove 603.

### DETAILED DESCRIPTION

The embodiments of the present disclosure are described in detail below, and examples of the embodiments are shown in the accompanying drawings, in which the same or similar reference numerals denote the same or similar elements or elements having the same or similar functions throughout. The embodiments described herein with reference to drawings are explanatory, illustrative, and used to generally understand the present disclosure, and cannot be construed to limit the present disclosure.

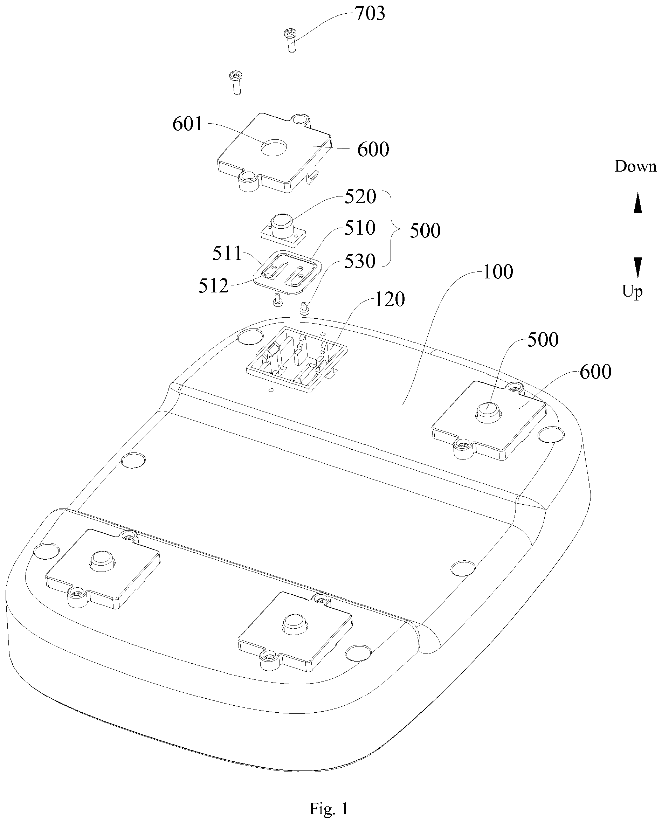

A split electric rice cooker 1000 according to embodiments of a first aspect of the present disclosure will be described in detail with reference to Fig. 1 to Fig. 7.

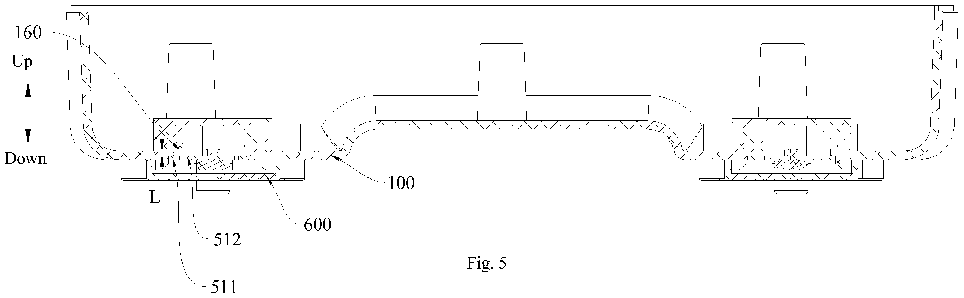

As illustrated in Fig. 1, the split electric rice cooker 1000 according to examples of one aspect of the present disclosure includes a base 100, a cooker body 200, a weighing device 500 and a press cover 600. The base 100 is provided with a weighing-device mounting groove 120 at the bottom thereof, a limiting plate 160 is provided in the weighing-device mounting groove 120 (see Fig. 5), the cooker body is apt to rest on the base 100 and is separable with respect to the base 100, and the weighing device 500 is provided in the weighing-device mounting groove 120.

The weighing device 500 includes a weighing sensor 510 and a support leg 520 connected with the weighing sensor 510. The weighing sensor 510 is fixed in the weighing-device mounting groove 120 and includes a body portion 511 and a cantilever weighing portion 512. The cantilever weighing portion 512 is provided to the body portion 511, and the cantilever weighing portion 512 is located below the limiting plate 160. The press cover 600 is provided at the bottom of the base 100 and shields the weighing-device mounting groove 120, and the press cover 600 is provided with a press-cover clearance hole 601 for the support leg 520 to pass downwards. When the cantilever weighing portion 512 is bent upwards and deformed with respect to the body portion 511, the limiting plate 160 is apt to abut against the cantilever weighing portion 512 to limit the position of the cantilever weighing portion 512.

For the split electric rice cooker according to embodiments of the present disclosure, by providing the limiting plate 160 in the weighing-device mounting groove 120, when the cooker body is overweight, the limiting plate 160 limits the position of the cantilever weighing portion 512 to prevent the cantilever weighing portion 512 from continuing to generate relative deformation with respect to the body portion 511, so as to provide overload protection for the weighing sensor 510 and guarantee normal use of the weighing function.

It should be noted that only when the weight applied to the body portion 511 exceeds a tolerable range of the weighing sensor 510, the limiting plate 160 abuts against a bottom surface of the body portion 511; when the weighing sensor 510 is in normal use, the limiting plate 160 moves towards the body portion 511 and remains at a certain balanced position, in which case the limiting plate 160 is spaced apart from the bottom surface of the body portion 511 by a certain distance. Thus, the weighing sensor 510 can be prevented from failure due to overloading, while the normal use thereof can be ensured.

In the split electric rice cooker according to an example of the present disclosure, a support plate and a vertical snapping plate 140 are provided in the weighing-device mounting groove 120, and the weighing sensor 510 is sandwiched between the vertical snapping plate 140 and the support plate. Therefore, the weighing sensor 510 is fastened by the support plate and the vertical snapping plate 140 together provided in the weighing-device mounting groove 120, such that not only the structure becomes simple and compact, but also the disassembly is convenient.

The vertical snapping plate 140 can fasten the weighing sensor 510 in a vertical direction, and the vertical snapping plate 140 and the support plate together can limit the weighing sensor 510 in a horizontal direction to prevent the weighing sensor 510 from rotating.

According to some examples of the present disclosure, the support plate includes a first support plate 131, a second support plate 132, a third support plate 133, and a fourth support plate 134. The first support plate 131, the second support plate 132, the third support plate 133, and the fourth support plate 134 are provided to a first side wall 121, a second side wall 122, a third side wall 123 and a fourth side wall 124 of the weighing-device mounting groove 120 respectively, in which the first side wall 121, the second side wall 122, the third side wall 123 and the fourth side wall 124 are connected successively.

Specifically, the weighing-device mounting groove 120 exhibits a substantially square groove, the first side wall 121 and the third side wall 123 of the weighing-device mounting groove 120 are opposite, the second side wall 122 and the fourth side wall 124 thereof are opposite, and the first to fourth side walls are provided with the first to fourth support plates respectively. An upper surface of the weighing sensor 510 is opposite to respective lower surfaces of the first to fourth support plates, and a lower surface of the weighing sensor 510 abuts against a snap hook of the vertical snapping plate 140, so as to limit the position of the weighing sensor 510 in the vertical direction; respective side surfaces of the first to fourth side walls abut against an outer edge of the weighing sensor 510, so as to limit the position of the weighing sensor 510 in the horizontal direction.

Therefore, the horizontal limiting of the weighing sensor 510 is achieved through the first to fourth support plates, to effectively prevent horizontal rotation of the weighing sensor 510, and enhance stability and reliability of the weighing sensor 510 fixed in the weighing-device mounting groove 120.

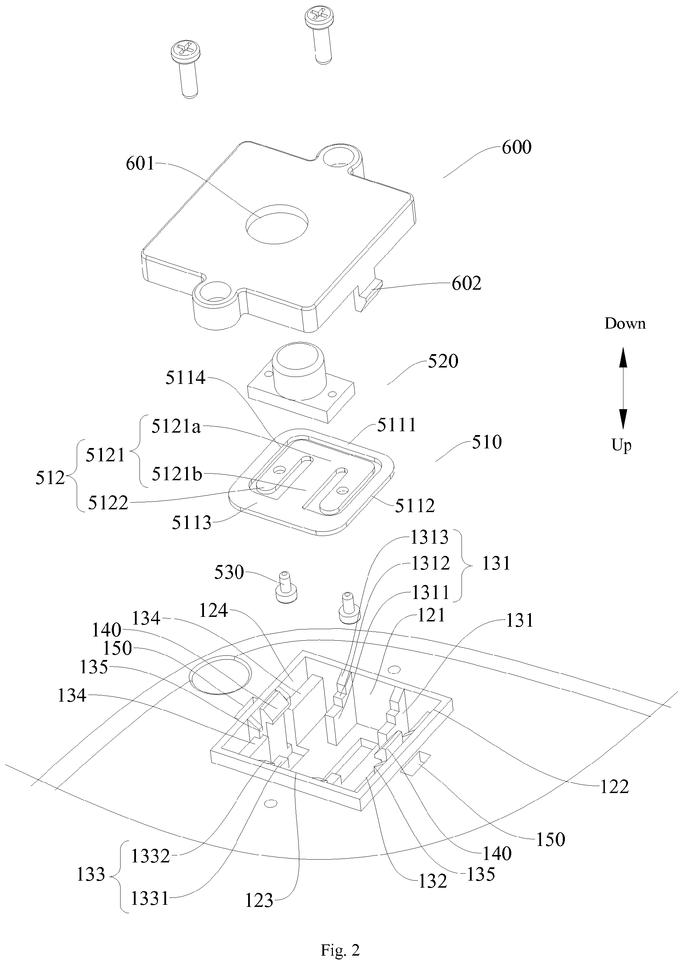

According to some embodiments of the present disclosure, the weighing sensor 510 includes the body portion 511 and the cantilever weighing portion 512. The body portion 511 is an annular frame body, and the cantilever weighing portion 512 is provided inside the body portion 511. Specifically, as illustrated in Fig. 2, the cantilever weighing portion 512 is connected with a part of an inner edge of the body portion 511, the support leg 520 is fixedly connected with a cantilever support portion, and the body portion 511 and the weighing-device mounting groove 120 are fixedly connected.

In this way, the support leg 520 of the base 100 is placed on the ground, and then the cooker body is placed on the base 100; since the weight imposed on the body portion 511 increases (i.e. the added weight of the cooker body), the body portion 511 moves downwards under the action of weight increase and drives the cantilever weighing portion 512 to produce elastic deformation; the weighing sensor 510 sends a corresponding weighing signal based on the amount of elastic deformation and realizes measurement of the weight of the cooker body.

According to some examples of the present disclosure, the cantilever weighing portion 512 includes a first cantilever 5121 and a second cantilever 5122. The first cantilever 5121 is T-shaped and includes a transverse section 5121a and a longitudinal section 5121b, the longitudinal section 5121b is connected with the body portion 511, and two ends of the transverse section 5121a are separately provided with the second cantilever 5122. Specifically, referring to Fig. 2, the longitudinal section 5121b has a first end connected with the body portion 511 and a second end connected with a middle portion of the transverse section 5121a; two ends of the transverse section 5121a are connected with two second cantilevers 5122 respectively; the second cantilever 5122 is provided with a mounting hole for fixed connection with the support leg 520, and a screw 530 passes through the second cantilever 5122 and the support leg 520 to fix the support leg 520 on the cantilever weighing portion 512.

Therefore, after the cooker body is placed on the base 100, the body portion 511 moves downwards under the action of the gravity of the cooker body, and drives the longitudinal section 5121b to move and produce elastic deformation with respect to the transverse section 5121a and the second cantilever 5122. The cantilever weighing portion 512 with the above structure can produce the elastic deformation easily and have high sensitivity of weight sensing, and the deformation of the cantilever weighing portion 512 is distributed more evenly, resulting in a more accurate detection result.

In some examples, the body portion 511 includes a first frame bar 5111, a second frame bar 5112, a third frame bar 5113, and a fourth frame bar 5114 connected successively. The first frame bar 5111 is adjacent to the transverse section 5121a. The first frame bar 5111, the second frame bar 5112, the third frame bar 5113, and the fourth frame bar 5114 are apt to abut against the first support plate 131, the second support plate 132, the third support plate 133, and the fourth support plate 134 respectively.

In a specific example shown in Fig. 2, the first frame bar 5111 and the third frame bar 5113 are opposite, while the second frame bar 5112 and the fourth frame bar 5114 are opposite. An inner edge of the first frame bar 5111 is adjacent to the transverse section 5121a of the cantilever weighing portion 512, an inner edge of the third frame bar 5113 is connected with the longitudinal section 5121b of the cantilever weighing portion 512, an inner edge of the second frame bar 5112 is adjacent to one of the second cantilevers 5122, and an inner edge of the fourth frame bar 5114 is adjacent to the other second cantilever 5122.

Thus, the structure of the cantilever weighing portion 512 is more compact, which shortens the volume of the weighing sensor 510, saves a mounting space of the weighing-device mounting groove 120, and hence makes the structure of the split electric rice cooker more compact.

According to some examples of the present disclosure, the first support plate 131 has an inverted three-step structure, and the third support plate 133 has an inverted two-step structure. The first frame bar 5111 is apt to abut against a bottom surface of a second step of the first support plate 131; the transverse section 5121a is suspended below a bottom surface of a first step 1311 of the first support plate 131; the first step 1311 of the first support plate 131 constitutes the limiting plate 160; and the third frame bar 5113 is apt to abut against a bottom surface of a first step 1331 of the third support plate 133.

Specifically, as illustrated in Fig. 2, a third step 1313 of the first support plate 131 is connected with the first side wall 121 of the weighing-device mounting groove 120; the third step 1313, the second step 1312 and the first step 1311 are arranged successively from outside to inside; and a clearance space is defined below the first step 1311 and at an inner side of the second step 1312. A second step 1332 of the third support plate 133 is connected with the third side wall 123 of the weighing-device mounting groove 120, and the second step 1332 and the first step 1331 are arranged successively from outside to inside.

Therefore, an upper surface of the first frame bar 5111 of the body portion 511 of the weighing sensor 510 abuts against the second step 1312 of the first support plate 131, and an upper surface of the third frame bar 5113 of the body portion 511 abuts against the first step 1331 of the third support plate 133; meanwhile, respective upper surfaces of the second frame bar 5112 and the fourth frame bar 5114 of the body portion 511 abut against the vertical snapping plate 140, such that they cooperate with one another to realize vertical position-limiting of the weighing sensor 510.

According to some examples of the present disclosure, the bottom surface of the second step 1312 of the first support plate 131 is flush with the bottom surface of the first step 1331 of the third support plate 133. Thus, the body portion 511 of the weighing sensor 510 is in a horizontal state after assembled with various support plates and is subject to a more balanced force, and the support from the support leg 520 connected with the weighing sensor 510 is more stable.

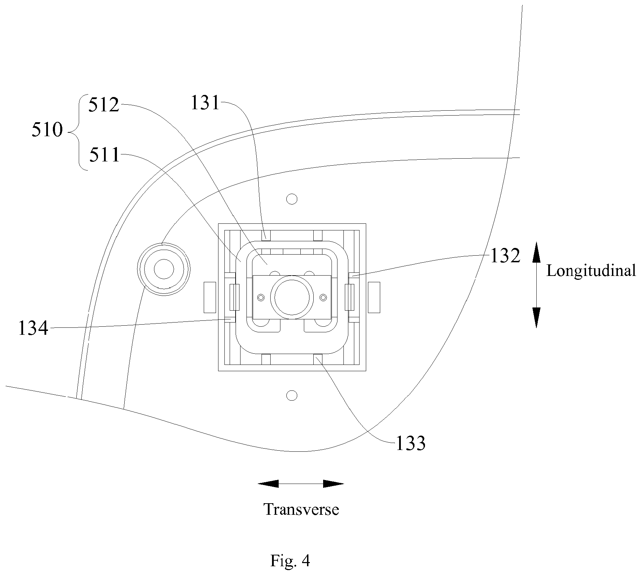

Combining Fig. 2 and Fig. 4, the third step 1313 of the first support plate 131 and the second step 1332 of the third support plate 133 clamp and respectively abut against the first frame bar 5111 and the third frame bar 5113, so as to limit the position of the body portion 511 in a direction parallel to the longitudinal section 5121b. Specifically, the first frame bar 5111 and the third frame bar 5113 are opposite in a longitudinal direction, a side surface of the third step 1313 of the first support plate 131 abuts against an outer edge of the first frame bar 5111, and a side surface of the second step 1332 of the third support plate 133 abuts against an outer edge of the third frame bar 5113. Thus, the body portion 511 is limited in the longitudinal direction and prevented from shaking in the longitudinal direction.

Referring to Fig. 2, a bottom surface of the third step 1313 of the first support plate 131 and a bottom surface of the second step 1332 of the third support plate 133 are both configured as a guide bevel. Specifically, the guide bevel gradually extends outwards from up to down. Thus, the provision of the guide bevel facilitates the installation of the weighing sensor 510 and makes the installation more convenient.

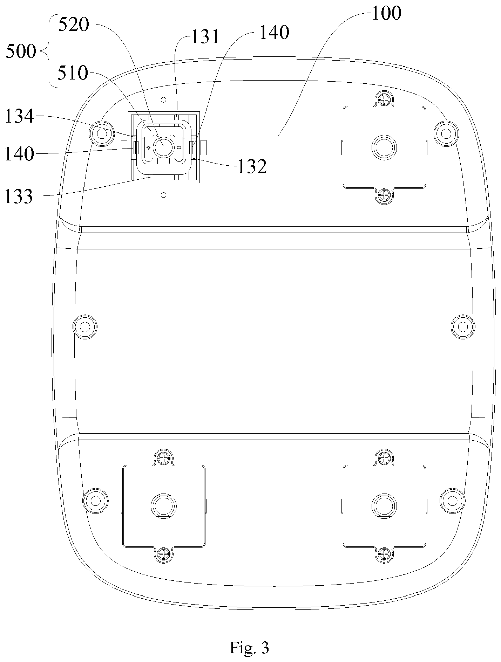

Further, referring to Figs. 3 and 4, the second support plate 132 and the fourth support plate 134 are respectively located outside the second cantilevers 5122 of the corresponding sides to evade the second cantilevers 5122. Specifically, a clearance groove is defined between the outside of the second cantilever 5122 and the body portion 511. Thus, the relative deformation between the cantilever weighing portion 512 and the body portion 511 is smooth and unimpeded, to avoid a phenomenon of jamming, thereby improving the operational stability and reliability of the split electric rice cooker.

According to some examples of the present disclosure, as shown in Fig. 2, a limiting protrusion 135 is provided on each of the second support plate 132 and the fourth support plate 134, and the limiting protrusion 135 on the second support plate 132 and the limiting protrusion 135 on the fourth support plate 134 clamp and respectively abut against the second frame bar 5112 and the fourth frame bar 5114, so as to limit the position of the body portion 511 in a direction parallel to the transverse section 5121a.

Specifically, the second frame bar 5112 and the fourth frame bar 5114 are opposite in a transverse direction, the limiting protrusion 135 of the second support plate 132 abuts against an outer edge of the second frame bar 5112, and the limiting protrusion 135 of the fourth support plate 134 abuts against an outer edge of the fourth frame bar 5114, thereby achieving the position-limiting of the body portion 511 in the transverse direction.

As a preferable example, each of the second support plate 132 and the fourth support plate 134 is divided into two sections spaced apart from each other, and one vertical snapping plate 140 is disposed between the two sections. An inner side of the vertical snapping plate 140 may abut against or be spaced apart from the corresponding support plate. Thus, a snapping force and a clamping force distributed on the body portion 511 can be distributed more evenly, thereby avoiding concentrated distribution of stress on the body portion 511.

In some examples, the bottom of the base 100 is further provided with an catching groove 150, the press cover 600 is further provided with a pre-assembled catching portion 602, and the pre-assembled catching portion 602 is engaged within the catching groove 150. Referring to Fig. 2, the press cover 600 is in a substantially square shape, and two opposite edges of the press cover 600 are provided with the pre-assembled catching portions 602. Correspondingly, the shape of the weighing-device mounting groove 120 is consistent with that of the press cover 600. The catching groove 150 is located at an outer side of the weighing-device mounting groove 120 and in one-to-one correspondence to the pre-assembled catching portion 602. During the assembly, the pre-assembled catching portion 602 of the press cover 600 is engaged in the catching groove 150 of the base 100 to implement the pre-assembly of the press cover 600.

Certainly, the number of the pre-assembled catching portion 602 and the catching groove 150 is not limited to two illustrated in Fig. 2, but may be more than two.

In order to enhance the tightness and reliability of the connection between the press cover 600 and the base 100, the press cover 600 can be fastened to the bottom of the base 100 through a press-cover threaded assembly 703. Specifically, each of the other two opposite edges of the press cover 600 is provided with a mounting ear having a mounting hole, the base 100 has a threaded hole corresponding to the mounting hole, and a screw of the press-cover threaded assembly 703 passes through the mounting hole and is tightly fitted with the threaded hole to fasten the press cover 600 on the base 100.

In a specific example illustrated in Fig. 5, a distance between the cantilever weighing portion 512 and the limiting plate 160 is L, the deformation displacement of the cantilever weighing portion 512 with respect to the body portion 511 is associated with the weight to be weighed, and the deformation displacement of the cantilever weighing portion 512 is S when the weighing sensor 510 is in a maximum range, in which L^S. Thus, it is possible to provide better overload protection for the weighing sensor 510, to avoid the occurrence of the phenomenon that the weighing sensor 510 fails because of exceeding the range during operation.

In a specific example illustrated in Fig. 1, the press cover 600 is provided with the press-cover clearance hole 601 for the support leg 520 to pass downwards.

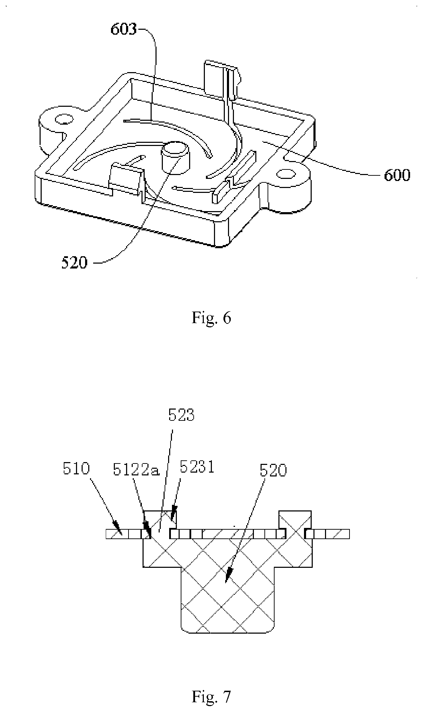

Certainly, the present disclosure is not limited thereto, and the press cover 600 can be connected with the support leg 520. For example, in a specific example illustrated in Fig. 7, the press cover 600 and the support leg 520 are integrally formed, and the support leg 520 is supported on a bottom surface of the cantilever weighing portion 512, and can be deformed along with the press cover 600 and push the cantilever weighing portion 512 upwards.

Thus, when the cooker body is mounted onto the base 100, the weighing sensor 510 is deformed under the action of gravity of the cooker body, such that the base 100 is able to weigh the cooker body and hence judges whether the cooker body matches it based on a weighing result, thereby improving accuracy of matching the base 100 with the cooker body. Additionally, by sealing the weighing sensor 510 in the weighing-device mounting groove 120 through the press cover 600, not only the weighing sensor 510 can be protected well, but also the split electric rice cooker has a more beautiful appearance.

According to some embodiments of the present disclosure, the press cover 600 is provided with a weakening structure. It could be understood that the weakening structure means weakening the rigidity of the press cover 600 to make the press cover 600 more easily deformed. Thus, when the cooker body is mounted on the base 100, the press cover 600 having the weakening structure is more easily deformed and generates a larger amount of deformation. In such a way, the pushing force of the press cover 600 on the cantilever weighing portion 512 is greater, which improves the sensitivity of the weighing device 510 and the accuracy of the measurement result.

In a specific embodiment illustrated in Fig. 6, the weakening structure is a weakening groove 603 penetrating the press cover 600. Thus, by providing the weakening groove 603 in the press cover 600, it is possible to weaken the rigidity of the press cover 600, save materials, and reduce costs.

In some examples, as illustrated in Fig. 7, the weighing sensor 510 is provided with a mounting hole 5122a; an upper surface of the support leg 520 is fixed with a fixing column 523; the fixing column 523 is provided through the mounting hole 5122a, and an upper end of the fixing column 523 is formed with a diameter-enlarged portion 5231; and a radial dimension of the diameter-enlarged portion 5231 is larger than a radial dimension of the mounting hole 5122a, such that the weighing sensor 510 is clamped and fixed between the diameter-enlarged portion 5231 and the support leg 520.

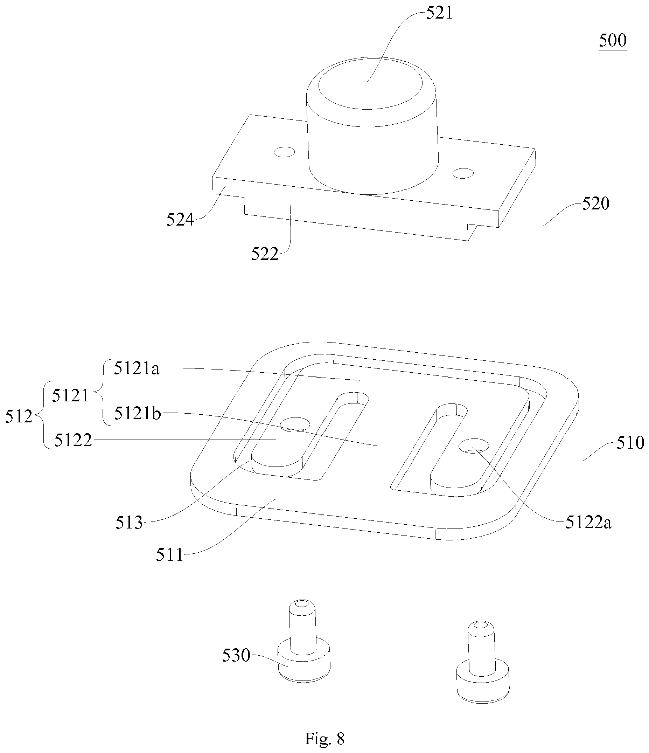

A split electric rice cooker according to embodiments of another aspect of the present disclosure will be described in detail with reference to Fig. 8 to Fig. 14.

As illustrated in Fig. 8, a weighing device 500 according to examples of another aspect of the present disclosure includes a weighing sensor 510, a support leg 520 and a limiting portion 524. The weighing sensor 510 includes a body portion 511 and a cantilever weighing portion 512, and the cantilever weighing portion 512 is provided to the body portion 511. The support leg 520 is supported on a bottom surface of the cantilever weighing portion 512 and fixed with the cantilever weighing portion 512. The limiting portion 524 is provided to the support leg 520 and located below the body portion 511, and the limiting portion 524 is apt to move upwards along with the support leg 520 with respect to the body portion 511 so as to abut against a bottom surface of the body portion 511.

For the weighing device 500 according to the embodiments of the present disclosure, the body portion 511 moves downwards with respect to the cantilever weighing portion 512, the support leg 520 and the limiting portion 524 under the gravity of an object to be weighed, that is, the support leg 520 and the limiting portion 524 together move upwards with respect the body portion 511. When the object to be weighed reaches a preset value, the limiting portion 524 abuts against the bottom surface of the body portion 511, to prevent the cantilever weighing portion 512 of the weighing sensor 510 from being excessively deformed and thus from generating an unrecoverable plastic deformation. Therefore, it is possible to avoid the failure of the weighing sensor 510 due to overloading, and prolong the service life of the weighing sensor 510.

It should be noted that only when the weight applied to the body portion 511 exceeds a tolerable range of the weighing sensor 510, the limiting portion 524 abuts against the bottom surface of the body portion 511; when the weighing sensor 510 is in normal use, the limiting portion 524 moves towards the body portion 511 and remains at a certain balanced position, in which case the limiting portion 524 is spaced apart from the bottom surface of the body portion 511 by a certain distance. Thus, it is possible to avoid the failure of the weighing sensor 510 due to overloading and at the same time guarantee the normal use of the weighing sensor 510.

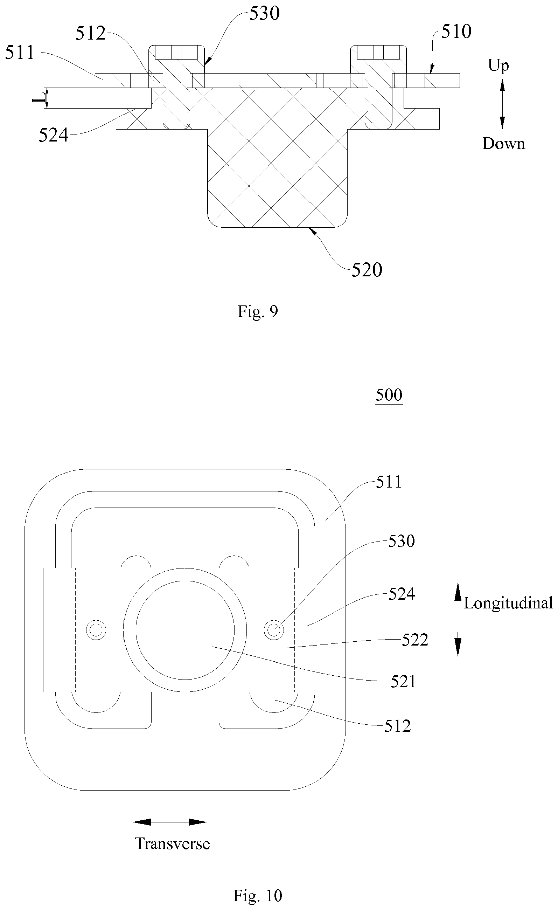

In a specific example illustrated in Fig. 9, a distance between the limiting portion 524 and the body portion 511 is L, the deformation displacement of the cantilever weighing portion 512 with respect to the body portion 511 is associated with the weight to be weighed, and the deformation displacement of the cantilever weighing portion 512 is S when the weighing sensor 510 is in a maximum range, in which L≤S. That is, the maximum allowable deformation amount of the cantilever weighing portion 512 which guarantees the normal operation of the weighing sensor 510 is S, and in this example the maximum deformation amount of the cantilever weighing portion 512 is L, such that the weighing sensor 510 can always be controlled within the working range.

In some examples, the body portion 511 is an annular frame body, and the cantilever weighing portion 512 is provided inside the body portion 511. Specifically, as illustrated in Fig. 8, the cantilever weighing portion 512 is provided inside the body portion 511 and fixedly connected with an inner edge of the body portion 511; the support leg 520 and the cantilever weighing portion 512 are opposite in an up-and-down direction and fixedly connected; the limiting portion 524 is connected to an outer side of the support leg 520 and is opposite to the body portion 511 in the up-and-down direction. Thus, the weighing sensor 510 occupies a smaller space and has a more compact structure.

Referring to Fig. 8, the cantilever weighing portion 512 includes a first cantilever 5121 and a second cantilever 5122. The first cantilever 5121 is fixed with the body portion 511, and the second cantilever 5122 is fixed with the first cantilever 5121 and is also fixed with the support leg 520. Further, the second cantilever 5122 is separately located at two sides of the first cantilever 5121. That is, two second cantilevers 5122 are provided, and the two second cantilevers 5122 are connected to two transverse sides of the first cantilever 5121 respectively. Thus, the cantilever weighing portion 512 is more evenly stressed, thereby avoiding being damaged by stress concentration.

Further, the first cantilevers 5121 at two sides of the second cantilever 5122 are arranged symmetrically, and the first cantilever 5121 is spaced apart from and arranged parallel to the second cantilever 5122. Thus, the structure of the weighing sensor 510 is more compact.

As a preferable example, the first cantilever 5121 is T-shaped and includes a transverse section 5121a and a longitudinal section 5121b, and two ends of the transverse section 5121a are separately provided with the second cantilever 5122. Specifically, referring to Fig. 9, the longitudinal section 5121b has a first end connected with the body portion 511 and a second end connected with a middle portion of the transverse section 5121a; two ends of the transverse section 5121a are connected with two second cantilevers 5122 respectively. Thus, when the body portion 511 moves downwards under the action of the object to be weighed, the support leg 520 and the second cantilever 5122 are stationary, and hence relative displacement between the second cantilever 5122 and the body portion 511 is generated. In such a case, the longitudinal section 5121b of the first cantilever 5121 generates elastic deformation under the action of the relative movement between the body portion 511 and the support leg 520, whereby the weighing sensor 510 can measure the weight of the object based on the deformation amount.

Certainly, the present disclosure is not limited thereto, and the shape of the cantilever weighing portion 512 is not limited to the shape illustrated in Fig. 1, but can be U-shaped, T-shaped, V-shaped or the like. A person skilled in the art can set the shape of the cantilever weighing portion 512 and the body portion 511 as needed.

Referring to Fig. 8, the support leg 520 includes a support-leg body 521 and a support block 522 provided to the support-leg body 521, and the support block 522 is fixed with the second cantilever 5122. Further, respective lower surfaces of the first cantilever 5121 and the second cantilever 5122 are flush with each other, and abut against an upper surface of the support block 522. Thus, it is possible to ensure the tightness and stability of connection between the first cantilever 5121 and the support block 522, and provide sufficient space for the deformation of the first cantilever 5121.

In some examples, the second cantilever 5122 is provided with a mounting hole 5122a; the weighing device 500 further includes a weighing-device threaded fastener 530; and the weighing-device threaded fastener 530 is threadedly fixed with the support block 522 after passing through the mounting hole 5122a from the top downwards. Thus, when the weighing sensor 510 goes wrong, it is more convenient to disassemble and repair.

As illustrated in Fig. 10, a distance between facing-away outer sides of the two second cantilevers 5122 is greater than or equal to a transverse length of the support block 522. Thus, the body portion 511 is prevented from interfering with an edge of the support block 522 when the cantilever weighing portion 512 moves with respect to the body portion 511 during the weighing, and hence a phenomenon of jamming during the weighing is avoided, thereby enhancing the operational reliability and stability of the weighing device 500.

In some examples, the limiting portion 524 is provided to an end face of each of two transverse ends of the support block 522. Thus, better protection of the weighing sensor 510 can be achieved. Certainly, the present disclosure is not limited thereto, and for example, in some other examples, the limiting portion 524 can be provided to an end face of each of two longitudinal ends of the support block 522.

A hollowed groove 513 is defined between the body portion 511 and the second cantilever 5122, and an outer side surface of the limiting portion 524 is outside an outer edge of the hollowed groove 513, as illustrated in Fig. 1. Thus, the cantilever weighing portion 512 adopting the above structure can produce the elastic deformation more easily and have high sensitivity of weight sensing, and the deformation of the cantilever weighing portion 512 is distributed more evenly, resulting in a more accurate detection result.

It could be understood that the weighing device 500 according to the embodiments of the present disclosure can be applied to the split electric rice cooker, and the weighing device 500 is provided to the base of the split electric rice cooker to measure the weight of the cooker body, thereby achieve proper match between the cooker body and the base.

A split electric rice cooker 1000 according to embodiments of a second aspect of the present disclosure includes the above weighing device 500 according to the above embodiments. The split electric rice cooker 1000 can avoid the failure of the weighing sensor 510 due to overloading and prolong the service life of the weighing sensor 510, resulting in good product quality.

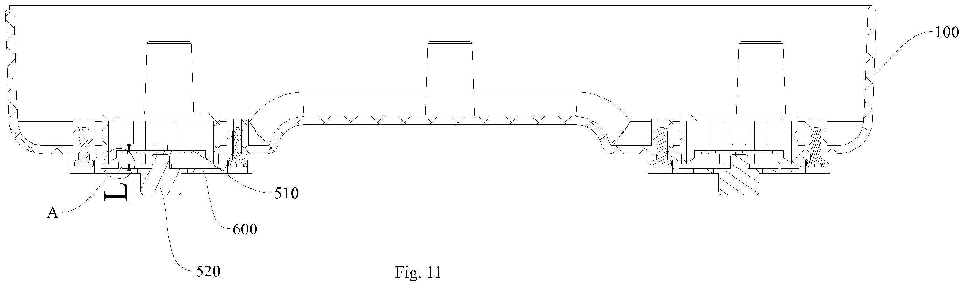

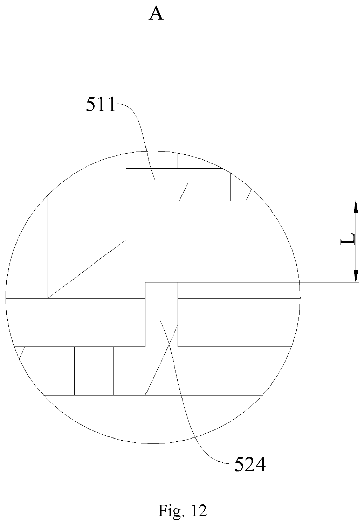

Referring to Figs. 11 and 12, in some examples, the split electric rice cooker further includes a base 100, a cooker body 200, and a press cover 600. The base 100 is provided with a weighing-device mounting groove 120 at the bottom thereof, and the weighing sensor 510 is fixed in the weighing-device mounting groove 120. The cooker body 200 is apt to rest on the base 100 and is separable with respect to the base 100. The press cover 600 is provided at the bottom of the base 100 and shields the weighing-device mounting groove 120, and the press cover 600 is integrally provided with a support leg 520. The support leg 520 is supported on a bottom surface of the cantilever weighing portion 512, and can be deformed along with the press cover 600 and push the cantilever weighing portion 512 upwards.

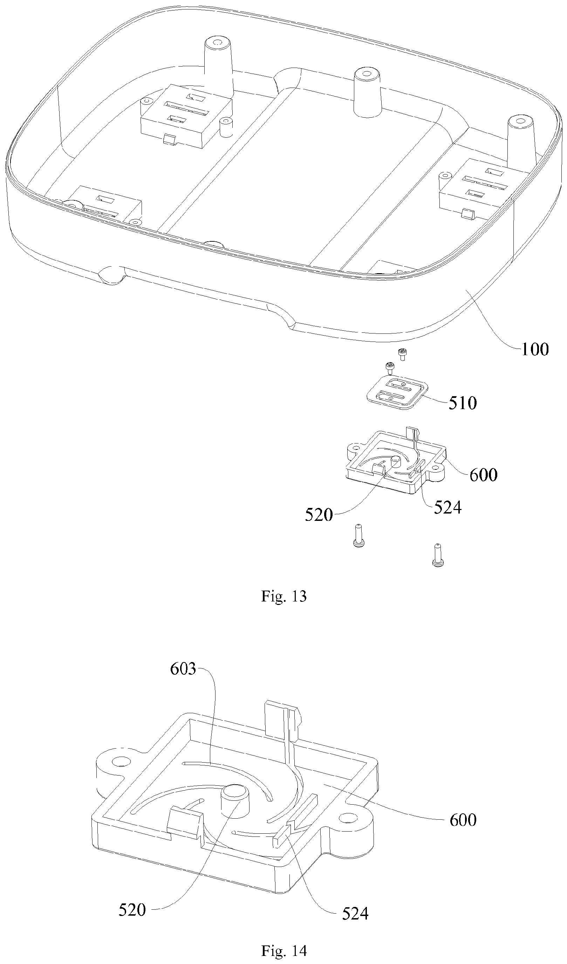

Further referring to Figs. 13 and 14, the limiting portion 524 is provided to the entirety formed by the press cover 600 and the support leg 520, and the limiting portion 524 can be located on an upper surface of a bottom wall of the press cover. By configuring the press cover 600 and the support leg 520 into an integral structure, and enabling the support leg 520 under pressure to move upwards relative to the base 100 and hence push the cantilever weighing portion 512 to deform the cantilever weighing portion 512, the weighing device 510 can obtain a corresponding weight change value based on the deformation amount of the cantilever weighing portion 512, and in such a way, the weight measurement of the cooker body is implemented. Due to the integral structure of the press cover 600 and the support leg 520, the assembly procedure is simplified, the production cost is saved, and the split electric rice cooker has a more compact structure and is more convenient to assemble.

According to some embodiments of the present disclosure, the press cover 600 is provided with a weakening structure. It could be understood that the weakening structure means weakening the rigidity of the press cover 600 to make the press cover 600 more easily deformed. Thus, when the cooker body is mounted on the base 100, the press cover 600 having the weakening structure is more easily deformed and generates a larger amount of deformation. In such a way, the pushing force of the press cover 600 on the cantilever weighing portion 512 is greater, which improves the sensitivity of the weighing device 510 and the accuracy of the measurement result.

In a specific embodiment illustrated in Fig. 14, the weakening structure is a weakening groove 603 penetrating the press cover 600. Thus, by providing the weakening groove 603 in the press cover 600, it is possible to weaken the rigidity of the press cover 600, save materials, and reduce costs.

Certainly, the present disclosure is not limited thereto, and the press cover 600 may not be connected with the support leg 520. For example, in the specific example illustrated in Fig. 1, the press cover 600 is provided with a press-cover clearance hole 601 for the support leg 520 to pass downwards.

Thus, when the cooker body is mounted on the base 100, the weighing sensor 510 is deformed under the action of gravity of the cooker body, and the base 100 is able to weigh the cooker body and hence judges whether the cooker body matches it based on a weighing result, thereby improving accuracy of matching the base 100 with the cooker body. Additionally, by sealing the weighing sensor 510 in the weighing-device mounting groove 120 through the press cover 600, not only the weighing sensor 510 can be protected better, but also the split electric rice cooker has a more beautiful appearance.

In some examples, as illustrated in Fig. 7, the weighing sensor 510 is provided with a mounting hole 5122a; an upper surface of the support leg 520 is fixed with a fixing column 524; the fixing column 524 is provided through the mounting hole 5122a, and an upper end of the fixing column 524 is formed with a diameter-enlarged portion 5231; and a radial dimension of the diameter-enlarged portion 5231 is larger than a radial dimension of the mounting hole 5122a, such that the weighing sensor 510 is clamped and fixed between the diameter-enlarged portion 5231 and the support leg 520.

In the specification, it is to be understood that terms such as "central," "longitudinal," "transverse," "length," "width," "thickness," "upper," "lower," "front," "rear," "left," "right," "vertical," "horizontal," "top," "bottom," "inner," "outer," "clockwise," "counterclockwise" "axially," "radially," and "circumferentially" should be construed to refer to the orientation as then described or as shown in the drawings under discussion. These relative terms are for convenience of description, and do not indicate or imply that the present disclosure have a particular orientation or be constructed or operated in a particular orientation, thus cannot be construed to limit the present disclosure.

In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, "a plurality of" means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature; while a first feature "below," "under," or "on bottom of" a second feature may include an embodiment in which the first feature is right or obliquely "below," "under," or "on bottom of" the second feature, or just means that the first feature is at a height lower than that of the second feature.

## Claims

1. A split electric rice cooker, comprising:
a base (100) provided with a weighing-device mounting groove (120) at a bottom thereof;
a cooker body (200) apt to rest on the base and separable with respect to the base;
a weighing device (500) provided in the weighing-device mounting groove, and comprising a weighing sensor (510) and a support leg (520) connected with the weighing sensor, the weighing sensor being fixed in the weighing-device mounting groove; and
a press cover (600) provided to the bottom of the base and shielding the weighing-device mounting groove;
**characterised in that**:
the press cover comprises a weakening groove (603);
the weighing sensor (510) comprises a body portion (511) and a cantilever weighing portion (512), the cantilever weighing portion being provided to the body portion and operable to be bent upwards and deformed with respect to the body portion;
a limiting plate (160) is provided in the weighing-device mounting groove (120), wherein the cantilever weighing portion (512) is located below the limiting plate, and when the cantilever weighing portion is bent upwards and deformed with respect to the body portion, the limiting plate is apt to abut against the cantilever weighing portion to limit a position of the cantilever weighing portion; or the press cover is provided with a limiting portion (524), the limiting portion is located below the body portion, and the limiting portion is apt to move upwards with respect to the body portion along with the support leg to abut against a bottom surface of the body portion, and;
wherein the press cover and the support leg are integrally formed, and the support leg is supported on a bottom surface of the cantilever weighing portion and is able to be deformed along with the press cover and push the cantilever weighing portion upwards.

2. The split electric rice cooker according to claim 1, wherein a support plate and a vertical snapping plate (140) are provided in the weighing-device mounting groove, and the weighing sensor is sandwiched between the vertical snapping plate and the support plate.

3. The split electric rice cooker according to claim 2, wherein the support plate comprises a first support plate (131), a second support plate (132), a third support plate (133), and a fourth support plate (134); the first support plate, the second support plate, the third support plate, and the fourth support plate are provided to a first side wall (121), a second side wall (122), a third side wall (123) and a fourth side wall (124) of the weighing-device mounting groove respectively; the first side wall, the second side wall, the third side wall and the fourth side wall are connected successively.

4. The split electric rice cooker according to any one of claims 1 to 3, wherein the body portion is an annular frame body, and the cantilever weighing portion is provided within the body portion.

5. The split electric rice cooker according to claim 4, wherein the cantilever weighing portion comprises a first cantilever and a second cantilever; the first cantilever is T-shaped and comprises a transverse section (5121a) and a longitudinal section (5121b); the longitudinal section is connected with the body portion, and two ends of the transverse section are separately provided with the second cantilever.

6. The split electric rice cooker according to claim 4, wherein the cantilever weighing portion comprises a first cantilever (1521) and a second cantilever (1522); the first cantilever is fixed with the body portion; the second cantilever is fixed with the first cantilever and also fixed with the support leg, wherein the second cantilever is located at each of two sides of the first cantilever.

7. The split electric rice cooker according to any one of claims 5 to 6, wherein the body portion comprises: a first frame bar (5111), a second frame bar (5112), a third frame bar (5113), and a fourth frame bar (5114), connected successively; the first frame bar is adjacent to the transverse section; the first frame bar, the second frame bar, the third frame bar, and the fourth frame bar are apt to abut against the first support plate, the second support plate, the third support plate, and the fourth support plate respectively wherein the first support plate has an inverted three-step structure;
the third support plate has an inverted two-step structure;
the first frame bar is apt to abut against a bottom surface of a second step of the first support plate; the transverse section is suspended below a bottom surface of a first step of the first support plate; the first step of the first support plate constitutes the limiting plate; and the third frame bar is apt to abut against a bottom surface of a first step of the third support plate.

8. The split electric rice cooker according to any one of claims 1 to 7, wherein a distance between the cantilever weighing portion and the limiting plate is L, deformation displacement of the cantilever weighing portion with respect to the body portion is associated with the weight to be weighed, and the deformation displacement of the cantilever weighing portion is S when the weighing sensor is in a maximum range, in which L≤S.

9. The split electric rice cooker according to any one of claims 1 to 6, wherein a distance between the limiting portion and the body portion is L, deformation displacement of the cantilever weighing portion with respect to the body portion is associated with the weight to be weighed, and the deformation displacement of the cantilever weighing portion is S when the weighing sensor is in a maximum range, in which L≤S.

10. The split electric rice cooker according to claim 5, wherein the second cantilevers at two sides of the first cantilever are arranged symmetrically, and the first cantilever is spaced apart from and arranged parallel to the second cantilever.

11. The split electric rice cooker according to any one of claims 1 to 10, wherein the weighing sensor is provided with a mounting hole (5122a), an upper surface of the support leg is fixed with a fixing column (524), the fixing column is provided through the mounting hole and has an upper end formed with a diameter-enlarged portion, and a radial dimension of the diameter-enlarged portion is larger than a radial dimension of the mounting hole, such that the weighing sensor is clamped and fixed between the diameter-enlarged portion and the support leg.

## Patentansprüche

1. Geteilter elektrischer Reiskocher, der Folgendes beinhaltet:
ein Unterteil (100), das an einem Boden davon mit einer Wägevorrichtungsbefestigungsaussparung (120) versehen ist;
einen Kocherkörper (200), der zum Ruhen auf dem Unterteil geeignet ist und in Bezug auf das Unterteil trennbar ist;
eine Wägevorrichtung (500), die in der Wägevorrichtungsbefestigungsaussparung bereitgestellt ist und einen Wägesensor (510) und einen mit dem Wägesensor verbundenen Stützfuß (520) beinhaltet, wobei der Wägesensor in der Wägevorrichtungsbefestigungsaussparung befestigt ist; und
eine Druckabdeckung (600), die auf dem Boden des Unterteils bereitgestellt ist und die Wägevorrichtungsbefestigungsaussparung abschirmt;
**dadurch gekennzeichnet, dass**:
die Druckabdeckung eine Schwächungsnut (603) beinhaltet;
der Wägesensor (510) einen Körperteil (511) und einen freitragenden Wägeteil (512) beinhaltet, wobei der freitragende Wägeteil am Körperteil bereitgestellt ist und funktionell ist, um nach oben gebogen und in Bezug auf den Körperteil verformt zu werden;
in der Wägevorrichtungsbefestigungsaussparung (120) eine Begrenzungsplatte (160) bereitgestellt ist, wobei der freitragende Wägeteil (512) sich unter der Begrenzungsplatte befindet, und, wenn der freitragende Wägeteil nach oben gebogen und in Bezug auf den Körperteil verformt wird, die Begrenzungsplatte zur Anlage an dem freitragenden Wägeteil geeignet ist, um eine Stellung des freitragenden Wägeteils zu begrenzen; oder die Druckabdeckung mit einem Begrenzungsteil (524) versehen ist, wobei der Begrenzungsteil sich unter dem Körperteil befindet und der Begrenzungsteil geeignet ist, sich zur Anlage an einer unteren Oberfläche des Körperteils in Bezug auf den Körperteil zusammen mit dem Stützfuß nach oben zu bewegen; und
wobei die Druckabdeckung und der Stützfuß einstückig ausgebildet sind und der Stützfuß auf einer unteren Oberfläche des freitragenden Wägeteils gelagert ist und zusammen mit der Druckabdeckung verformt werden und den freitragenden Wägeteil nach oben drücken kann.

2. Geteilter elektrischer Reiskocher nach Anspruch 1, wobei in der Wägevorrichtungsbefestigungsaussparung eine tragende Platte und eine vertikale Schnappbefestigungsplatte (140) bereitgestellt sind und der Wägesensor zwischen der vertikalen Schnappbefestigungsplatte und der tragenden Platte eingesetzt ist.

3. Geteilter elektrischer Reiskocher nach Anspruch 2, wobei die tragende Platte eine erste tragende Platte (131), eine zweite tragende Platte (132), eine dritte tragende Platte (133) und eine vierte tragende Platte (134) beinhaltet; wobei die erste tragende Platte, die zweite tragende Platte, die dritte tragende Platte und die vierte tragende Platte an einer ersten Seitenwand (121), einer zweiten Seitenwand (122), einer dritten Seitenwand (123) bzw. einer vierten Seitenwand (124) der Wägevorrichtungsbefestigungsaussparung bereitgestellt sind; wobei die erste Seitenwand, die zweite Seitenwand, die dritte Seitenwand und die vierte Seitenwand der Reihe nach miteinander verbunden sind.

4. Geteilter elektrischer Reiskocher nach einem der Ansprüche 1 bis 3, wobei der Körperteil ein Ringrahmenkörper ist und der freitragende Wägeteil in dem Körperteil bereitgestellt ist.

5. Geteilter elektrischer Reiskocher nach Anspruch 4, wobei der freitragende Wägeteil einen ersten Ausleger und einen zweiten Ausleger beinhaltet; der erste Ausleger T-förmig ist und einen Querabschnitt (5121a) und einen Längsabschnitt (5121b) beinhaltet; der Längsabschnitt mit dem Körperteil verbunden ist und zwei Enden des Querabschnitts separat mit dem zweiten Ausleger versehen sind.

6. Geteilter elektrischer Reiskocher nach Anspruch 4, wobei der freitragende Wägeteil einen ersten Ausleger (1521) und einen zweiten Ausleger (1522) beinhaltet; der erste Ausleger am Körperteil befestigt ist; der zweite Ausleger ersten Ausleger befestigt ist und auch mit dem Stützfuß befestigt ist, wobei der zweite Ausleger sich an jeder von zwei Seiten des ersten Auslegers befindet.

7. Geteilter elektrischer Reiskocher nach einem der Ansprüche 5 bis 6, wobei der Körperteil Folgendes beinhaltet: ein erstes Rahmenelement (5111), ein zweites Rahmenelement (5112), ein drittes Rahmenelement (5113) und ein viertes Rahmenelement (5114), die der Reihe nach miteinander verbunden sind; wobei das erste Rahmenelement an den Querabschnitt angrenzt; wobei das erste Rahmenelement, das zweite Rahmenelement, das dritte Rahmenelement und das vierte Rahmenelement zur Anlage an der ersten tragenden Platte, der zweiten tragenden Platte, der dritten tragenden Platte bzw. der vierten tragenden Platte geeignet sind; wobei die erste tragende Platte eine umgekehrte dreistufige Struktur hat;
die dritte tragende Platte eine umgekehrte zweistufige Struktur hat;
das erste Rahmenelement zur Anlage an einer unteren Oberfläche einer zweiten Stufe der ersten tragenden Platte geeignet ist; wobei der Querabschnitt unterhalb einer unteren Oberfläche einer ersten Stufe der ersten tragenden Platte hängt; die erste Stufe der ersten tragenden Platte die Begrenzungsplatte bildet; und das dritte Rahmenelement zur Anlage an einer unteren Oberfläche einer ersten Stufe der dritten tragenden Platte geeignet ist.

8. Geteilter elektrischer Reiskocher nach einem der Ansprüche 1 bis 7, wobei ein Abstand zwischen dem freitragenden Wägeteil und der Begrenzungsplatte L ist, die Verformungsverlagerung des freitragenden Wägeteils in Bezug auf den Körperteil mit dem zu wiegenden Gewicht verbunden ist und die Verformungsverlagerung des freitragenden Wägeteils S ist, wenn der Wägesensor in einem maximalen Bereich ist, in dem L≤S ist.

9. Geteilter elektrischer Reiskocher nach einem der Ansprüche 1 bis 6, wobei ein Abstand zwischen dem Begrenzungsteil und dem Körperteil L ist, die Verformungsverlagerung des freitragenden Wägeteils in Bezug auf den Körperteil mit dem zu wiegenden Gewicht verbunden ist und die Verformungsverlagerung des freitragenden Wägeteils S ist, wenn der Wägesensor in einem maximalen Bereich ist, in dem L≤S ist.

10. Geteilter elektrischer Reiskocher nach Anspruch 5, wobei die zweiten Ausleger an zwei Seiten des ersten Auslegers symmetrisch angeordnet sind und der erste Ausleger von bzw. zu dem zweiten Ausleger beabstandet und parallel angeordnet ist.

11. Geteilter elektrischer Reiskocher nach einem der Ansprüche 1 bis 10, wobei der Wägesensor mit einem Befestigungsloch (5122a) versehen ist, eine obere Oberfläche des Stützfußes an einer Befestigungssäule (524) befestigt ist, die Befestigungssäule durch das Befestigungsloch bereitgestellt ist und ein oberes Ende hat, das mit einem Teil mit vergrößertem Durchmesser ausgebildet ist, und eine radiale Abmessung des Teils mit vergrößertem Durchmesser größer als eine radiale Abmessung des Befestigungslochs ist, so dass der Wägesensor zwischen dem Teil mit vergrößertem Durchmesser und dem Stützfuß eingespannt und befestigt ist.

## Revendications

1. Cuiseur à riz électrique du type divisé, comportant :
une base (100) dotée d'une rainure de montage de dispositif de pesage (120) au niveau d'une partie inférieure de celle-ci ;
un corps de cuiseur (200) en mesure de venir se reposer sur la base et en mesure de se séparer par rapport à la base ;
un dispositif de pesage (500) mis en oeuvre dans la rainure de montage de dispositif de pesage, et comportant un capteur de pesage (510) et une patte de support (520) reliée au capteur de pesage, le capteur de pesage étant fixe dans la rainure de montage de dispositif de pesage ; et
un couvercle à pression (600) mis en oeuvre au niveau de la partie inférieure de la base et servant à protéger la rainure de montage de dispositif de pesage ;
**caractérisé en ce que** :
le couvercle à pression comporte une rainure d'affaiblissement (603) ;
le capteur de pesage (510) comporte une partie formant corps (511) et une partie de pesage en porte-à-faux (512), la partie de pesage en porte-à-faux étant mise en oeuvre sur la partie formant corps et pouvant être pliée vers le haut et être déformée par rapport à la partie formant corps ;
une plaque de limitation (160) est mise en oeuvre dans la rainure de montage de dispositif de pesage (120), dans lequel la partie de pesage en porte-à-faux (512) est située sous la plaque de limitation, et quand la partie de pesage en porte-à-faux est pliée vers le haut et déformée par rapport à la partie formant corps, la plaque de limitation est en mesure de venir prendre appui contre la partie de pesage en porte-à-faux pour limiter une position de la partie de pesage en porte-à-faux ; ou le couvercle à pression est doté d'une partie de limitation (524), la partie de limitation est située sous la partie formant corps, et la partie de limitation est en mesure de se déplacer vers le haut par rapport à la partie formant corps en même temps que la patte de support pour venir prendre appui contre une surface inférieure de la partie formant corps, et ;
dans lequel le couvercle à pression et la patte de support sont formés d'un seul tenant, et la patte de support est supportée sur une surface inférieure de la partie de pesage en porte-à-faux et est en mesure d'être déformée en même temps que le couvercle à pression et de pousser la partie de pesage en porte-à-faux vers le haut.

2. Cuiseur à riz électrique du type divisé selon la revendication 1, dans lequel une plaque de support et une plaque d'encliquetage verticale (140) sont mises en oeuvre dans la rainure de montage de dispositif de pesage, et le capteur de pesage est pris en sandwich entre la plaque d'encliquetage verticale et la plaque de support.

3. Cuiseur à riz électrique du type divisé selon la revendication 2, dans lequel la plaque de support comporte une première plaque de support (131), une deuxième plaque de support (132), une troisième plaque de support (133), et une quatrième plaque de support (134) ; la première plaque de support, la deuxième plaque de support, la troisième plaque de support, et la quatrième plaque de support sont mises en oeuvre au niveau d'une première paroi latérale (121), d'une deuxième paroi latérale (122), d'une troisième paroi latérale (123) et d'une quatrième paroi latérale (124) de la rainure de montage de dispositif de pesage respectivement ; la première paroi latérale, la deuxième paroi latérale, la troisième paroi latérale et la quatrième paroi latérale sont reliées de manière successive.

4. Cuiseur à riz électrique du type divisé selon l'une quelconque des revendications 1 à 3, dans lequel la partie formant corps est un corps de cadre annulaire, et la partie de pesage en porte-à-faux est mise en oeuvre à l'intérieur de la partie formant corps.

5. Cuiseur à riz électrique du type divisé selon la revendication 4, dans lequel la partie de pesage en porte-à-faux comporte un premier porte-à-faux et un deuxième porte-à-faux ; le premier porte-à-faux est en forme de T et comporte une section transversale (5121a) et une section longitudinale (5121b) ; la section longitudinale est reliée à la partie formant corps, et deux extrémités de la section transversale sont mises en oeuvre séparément avec le deuxième porte-à-faux.

6. Cuiseur à riz électrique du type divisé selon la revendication 4, dans lequel la partie de pesage en porte-à-faux comporte un premier porte-à-faux (1521) et un deuxième porte-à-faux (1522) ; le premier porte-à-faux est fixé à la partie formant corps ; le deuxième porte-à-faux est fixé au premier porte-à-faux et également fixé à la patte de support, dans lequel le deuxième porte-à-faux est situé au niveau de chacun des deux côtés du premier porte-à-faux.

7. Cuiseur à riz électrique du type divisé selon l'une quelconque des revendications 5 à 6, dans lequel la partie formant corps comporte : une première barre de cadre (5111), une deuxième barre de cadre (5112), une troisième barre de cadre (5113), et une quatrième barre de cadre (5114), reliées de manière successive ; la première barre de cadre est adjacente par rapport à la section transversale ; la première barre de cadre, la deuxième barre de cadre, la troisième barre de cadre, et la quatrième barre de cadre sont en mesure de venir prendre appui contre la première plaque de support, la deuxième plaque de support, la troisième plaque de support, et la quatrième plaque de support respectivement dans lequel la première plaque de support a une structure inversée à trois gradins ;
la troisième plaque de support a une structure inversée à deux gradins ;
la première barre de cadre est en mesure de venir prendre appui contre une surface inférieure d'un deuxième gradin de la première plaque de support ; la section transversale est suspendue sous une surface inférieure d'un premier gradin de la première plaque de support ; le premier gradin de la première plaque de support constitue la plaque de limitation ; et la troisième barre de cadre est en mesure de venir prendre appui contre une surface inférieure d'un premier gradin de la troisième plaque de support.

8. Cuiseur à riz électrique du type divisé selon l'une quelconque des revendications 1 à 7, dans lequel une distance entre la partie de pesage en porte-à-faux et la plaque de limitation est en L, un déplacement par déformation de la partie de pesage en porte-à-faux par rapport à la partie formant corps est associé au poids destiné à être pesé, et le déplacement par déformation de la partie de pesage en porte-à-faux est en S quand le capteur de pesage se situe dans une plage maximum, dans laquelle L≤S.

9. Cuiseur à riz électrique du type divisé selon l'une quelconque des revendications 1 à 6, dans lequel une distance entre la partie de limitation et la partie formant corps est en L, un déplacement par déformation de la partie de pesage en porte-à-faux par rapport à la partie formant corps est associé au poids destiné à être pesé, et le déplacement par déformation de la partie de pesage en porte-à-faux est en S quand le capteur de pesage se situe dans une plage maximum, dans laquelle L≤S.

10. Cuiseur à riz électrique du type divisé selon la revendication 5, dans lequel les deuxièmes porte-à-faux au niveau de deux côtés du premier porte-à-faux sont agencés de manière symétrique, et le premier porte-à-faux est espacé à distance du, et agencé de manière parallèle par rapport au, deuxième porte-à-faux.

11. Cuiseur à riz électrique du type divisé selon l'une quelconque des revendications 1 à 10, dans lequel le capteur de pesage est doté d'un trou de montage (5122a), une surface supérieure de la patte de support est fixé à une colonne de fixation (524), la colonne de fixation est mise en oeuvre au travers du trou de montage et a une extrémité supérieure formée avec une partie au diamètre élargi, et une dimension radiale de la partie au diamètre élargi est supérieure à une dimension radiale du trou de montage, de telle sorte que le capteur de pesage est serré et fixé entre la partie au diamètre élargi et la patte de support.
